# DEMANDE DE BREVET EUROPEEN

(11) **EP 4 765 363 A1**
(43) Date de publication de la demande: **24.06.2026**
(21) Numéro de dépôt: 25205708.8
(22) Date de dépôt: 30.09.2025
(51) Int. Cl.: H01M 50/107, H01M 50/152, H01M 50/342, H01M 50/531, H01M 50/559, H01M 50/578, H01M 50/583, H01M 10/04, H01M 50/591, H01M 10/0587, H01M 50/586, H01M 50/593, H01M 10/052, H01M 4/38, H01M 4/485, H01M 4/505, H01M 4/525, H01M 4/587, H01M 50/483

(54) **ACCUMULATEUR ELECTROCHIMIQUE INTEGRANT UN DISPOSITIF D'INTERRUPTION DE COURANT A POUVOIR DE COUPURE ÉLEVÉ**

(30) Priorité: 20.12.2024 FR 2414958
(71) Demandeur: Commissariat à l'Energie Atomique et aux Energies Alternatives, 75015 Paris (FR)
(72) Inventeur: CHAUVIN, Julien, 49004 ANGERS CEDEX 01 (FR); CHATROUX, Daniel, 38054 GRENOBLE CEDEX 09 (FR); VINCENT, Rémi, 38054 GRENOBLE CEDEX 09 (FR)
(74) Mandataire: Ipsilon

(57) **Abrégé**

L'invention concerne un accumulateur électrochimique (A) métal-ion avec un dispositif d'interruption de courant ,(11) intégré dans l'accumulateur, qui comprend un réservoir (14) rempli d'au moins un matériau endothermique et isolant électrique. Le dispositif étant commandé en pression, et. possédant un haut pouvoir de coupure.

## Description

### Domaine technique

La présente invention concerne le domaine des accumulateurs électrochimiques, et plus particulièrement des accumulateurs métal-ion.

Plus particulièrement, l'invention a trait à l'amélioration de la sécurité des batteries d'accumulateurs électrochimiques.

L'invention vise principalement à proposer un dispositif de sécurité à interruption de courant à pouvoir de coupure amélioré qui puisse être intégré dans un accumulateur électrochimique de type métal-ion notamment pour empêcher son emballement thermique afin de limiter les risques de propagation au sein d'un pack batterie.

Bien que décrite en référence à un accumulateur Lithium-ion, l'invention s'applique à tout accumulateur électrochimique métal-ion, c'est-à-dire également Sodium-ion, Magnésium-ion, Aluminium-ion...ou de manière plus générale à tout accumulateur électrochimique. L'invention s'applique à toute chimie d'accumulateurs métal-ion, comme par exemple NMC/Graphite, NCA/Graphite, NMC/G-Si, LFP/ Graphite, Na-ion avec électrolyte liquide.

Un accumulateur selon l'invention peut être dans un module ou pack-batterie embarqué ou stationnaire. Par exemple, les domaines des transports électriques et hybrides et les systèmes de stockage connectés au réseau peuvent être envisagés dans le cadre de l'invention.

### Technique antérieure

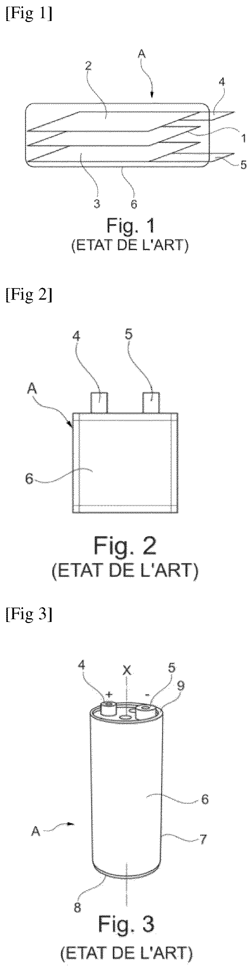

Telle qu'illustrée schématiquement en figures 1 et 2, une batterie ou accumulateur lithium-ion comporte usuellement au moins une cellule électrochimique constituée d'un constituant d'électrolyte 1 entre une électrode positive ou cathode 2 et une électrode négative ou anode 3, un collecteur de courant 4 connecté à la cathode 2, un collecteur de courant 5 connecté à l'anode 3 et enfin, un emballage 6 agencé pour contenir la cellule électrochimique avec étanchéité tout en étant traversé par une partie des collecteurs de courant 4, 5.

L'architecture des batteries lithium-ion conventionnelles comporte une anode, une cathode et un électrolyte. Plusieurs types de géométrie d'architecture conventionnelle sont connus :
- une géométrie cylindrique telle que divulguée dans la demande de brevet US 2006/0121348,
- une géométrie pavé droit, dite prismatique dans le domaine des batteries, telle que divulguée dans les brevets US 7348098, US 7338733;
- une géométrie en empilement telle que divulguée dans les demandes de brevet US 2008/060189, US 2008/0057392, et brevet US 7335448.

Le constituant d'électrolyte 1 peut être de forme solide, liquide ou gel. Sous forme gel ou liquide, le constituant peut comprendre un séparateur en polymère, en céramique ou en composite microporeux imbibé d'électrolyte (s) organique (s) ou de type liquide ionique qui permet le déplacement de l'ion Lithium de la cathode à l'anode pour une charge et inversement pour une décharge, ce qui génère le courant. Le séparateur est communément réalisé en polypropylène (PP) ou polyéthylène (PE), ou par un multicouche de polymères. Cette fonctionnalité de microporeux imprégné d'électrolyte est assurée en générant des pores de diamètres contrôlés (fabrication dite « wet process » ou « dry process ») dans le matériau polymère. L'électrolyte est en général un mélange de solvants organiques, par exemple des carbonates dans lesquels est ajouté un sel de lithium typiquement LiPF₆.

L'électrode positive ou cathode est constituée de matériaux d'insertion du cation Lithium qui sont en général composites, comme le phosphate de fer lithié LiFePO₄, l'oxyde de cobalt lithié LiCoO₂, l'oxyde de manganèse lithié, éventuellement substitué, LiMn₂O₄ ou d'oxyde de métaux de transition, comme les matériaux lamellaires par exemple, un matériau à base de LiNixMnyCozO₂ avec x+y+z = 1, tel que LiNi_{0.33}Mn_{0.33}Co_{0.33}O₂, ou un matériau à base de type oxyde de nickel cobalt aluminium LiNixCoyAlzO2 avec x+y+z = 1, tel que LiNi_{0.8}Co_{0.15}Al_{0.05}O₂.

L'électrode négative ou anode est très souvent constituée de carbone, graphite ou de Li₄TiO₅O₁₂ (matériau titanate), éventuellement peut être à base de silicium ou à base de lithium, ou à base d'étain et de leurs alliages ou de composite formé à base de silicium. Cette électrode négative tout comme l'électrode positive peut également contenir des additifs conducteurs électroniques ainsi que des additifs polymères qui lui confèrent des propriétés mécaniques et des performances électrochimiques appropriées à l'application batterie lithium-ion ou à son procédé de mise en œuvre.

L'anode et la cathode en matériau d'insertion au Lithium peuvent être déposées en continu selon une technique usuelle sous la forme d'une couche active sur une feuille ou feuillard métallique constituant un collecteur de courant.

Le collecteur de courant 4 connecté à l'électrode positive est en général en aluminium.

Le collecteur de courant 5 connecté à l'électrode négative est en général en cuivre, en cuivre nickelé ou en aluminium.

Plus précisément, l'aluminium est utilisé pour les collecteurs de courant communs à des électrodes positive et négative de titanate Li4Ti5O12. Le cuivre est plutôt pour les électrodes négatives de graphite (Cgr), de silicium (Si) ou de composite silicium (Si-C).

Traditionnellement, une batterie ou accumulateur Li-ion utilise un couple de matériaux à l'anode et à la cathode lui permettant de fonctionner à un niveau de tension, typiquement entre 1,5 et 4,2 Volt.

Les bornes électriques, ou les collecteurs de courant de l'accumulateur peuvent également être implémentées de fonction liées à la sécurité de l'accumulateur, en déclenchant l'ouverture du circuit électrique lors d'un défaut de l'accumulateur.

Une batterie ou accumulateur lithium-ion peut comporter bien évidemment une pluralité de cellules électrochimiques.

Selon le type d'application visée, on cherche à réaliser soit un accumulateur lithium-ion fin et flexible soit un accumulateur rigide : l'emballage est alors soit souple soit rigide et constitue dans ce dernier cas en quelque sorte un boitier.

Les emballages souples sont usuellement fabriqués à partir d'un matériau composite multicouches, constitué d'un empilement de couches d'aluminium recouvertes par un ou plusieurs film(s) en polymère laminés par collage.

Les emballages rigides sont quant à eux utilisés lorsque les applications visées sont contraignantes où l'on cherche une longue durée de vie, avec par exemple des pressions à supporter bien supérieures et un niveau d'étanchéité requis plus strict, typiquement inférieure à 10⁻⁸ mbar.l/s, ou dans des milieux à fortes contraintes comme le domaine aéronautique ou spatial.

Les emballages rigides (boitiers) sont usuellement fabriqués à partir d'un matériau métallique, typiquement un alliage d'aluminium ou en acier inoxydable ou d'un polymère rigide comme l'acrylonitrile butadiène styrène (ABS).

La géométrie de la plupart des boitiers rigides d'emballages d'accumulateurs Li-ion est cylindrique, car la plupart des cellules électrochimiques des accumulateurs sont enroulées par bobinage selon une géométrie cylindrique autour d'un mandrin cylindrique. Des formes prismatiques de boitiers ont également déjà été réalisées par bobinage autour d'un mandrin aplati.

Un des types de boitier rigide de forme cylindrique, usuellement fabriqué pour un accumulateur Li-ion de forte capacité, est illustré en figure 3.

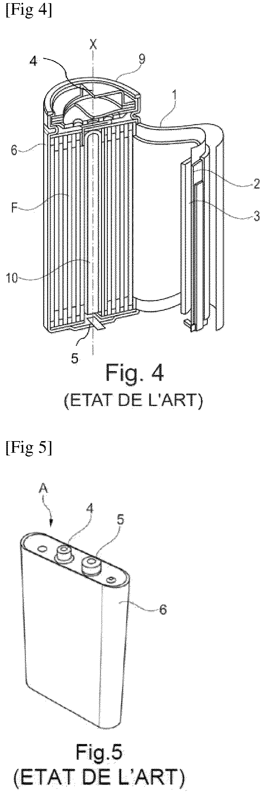

On a représenté en figure 4 une vue en coupe longitudinale d'un tel boitier 6 de géométrie axisymétrique autour de l'axe central X et logeant un faisceau électrochimique F de forme allongée et comportant une seule cellule électrochimique constituée d'une anode 3 et d'une cathode 4 de part et d'autre d'un séparateur 1 adapté pour être imprégné de l'électrolyte. La figure 4 montre le faisceau F obtenu, usuellement par bobinage autour d'un axe d'enroulement central 10, à l'intérieur du boitier cylindrique 6.

Sur la figure 3, le boitier 6 comporte une enveloppe latérale cylindrique 7, un fond 8 à une extrémité, un couvercle 9 à l'autre extrémité, le fond 8 et le couvercle 9 étant assemblés à l'enveloppe 7. Le couvercle 9 supporte les pôles ou bornes de sortie du courant 4, 5. Une des bornes de sortie (pôles), par exemple la borne négative 5 est soudée sur le couvercle 9 tandis que l'autre borne de sortie, par exemple la borne positive 4, passe à travers le couvercle 9 avec interposition d'un joint non représenté qui isole électriquement la borne positive 4 du couvercle.

Le type de boitier rigide largement fabriqué consiste également en un godet embouti et un couvercle, soudés entre eux sur leur périphérie. En revanche, les collecteurs de courant comprennent une traversée avec une partie faisant saillie sur le dessus du boitier et qui forme une borne aussi appelée pôle apparent de la batterie.

Un boitier rigide de forme prismatique est également montré en figure 5.

Un pack batterie est constitué d'un nombre variable d'accumulateurs pouvant atteindre plusieurs milliers qui sont reliés électriquement en série et/ou en parallèle entre eux et généralement par des barres de connexion, appelées usuellement busbars.

Dans le développement et la fabrication des batteries lithium-ion, pour chaque profil/nouvelle demande, quels que soient les acteurs du marché, cela nécessite des dimensionnements précis (architectures électriques série/parallèle, mécaniques, thermiques...) pour concevoir de manière optimale un pack batterie performant et sûr.

En particulier, la sécurité des accumulateurs lithium-ion doit être prise en considération à la fois à l'échelle d'un accumulateur seul, d'un module et d'un pack-batterie.

En effet, lorsqu'un accumulateur lithium-ion est abusé, électriquement, thermiquement ou mécaniquement des réactions exothermiques peuvent se produire, menant dans le pire des cas à un emballement thermique. Dans ce cas, des fumées, flammes, et même une explosion peuvent survenir. La sécurité des accumulateurs Li-ion est donc un aspect fondamental ayant une influence sur tout leur cycle de vie.

Différents dispositifs passifs ou actifs ayant une fonction de sécurité peuvent également être intégrés au niveau d'une cellule (accumulateur), et/ou d'un module et/ou du pack-batterie pour prévenir les problèmes, lorsque la batterie se retrouve dans des conditions dites de fonctionnement abusif ou en cas de défaut au niveau d'une cellule.

Un système électrochimique lithium, que ce soit à l'échelle de la cellule (accumulateur), du module ou du pack, produit des réactions exothermiques quel que soit le profil de cyclage donné. Ainsi, à l'échelle d'un accumulateur unitaire, en fonction des chimies considérées, le fonctionnement optimal des accumulateurs lithium ion est limité dans une certaine gamme de température.

Un accumulateur électrochimique doit fonctionner dans une plage de température définie, typiquement généralement inférieure à 70°C à sa surface extérieure de boitier, sous peine de dégrader ses performances, voire même de le dégrader physiquement jusqu'à destruction.

On peut citer pour exemple les accumulateurs lithium de chimie fer-phosphate qui ont une plage de fonctionnement comprise généralement entre -20 °C et +60 °C. Au-delà de 60 °C, les matériaux et l'électrolyte peuvent subir des dégradations importantes réduisant les performances de la cellule. Au-delà d'une température dite d'emballement thermique pouvant être comprise entre 70°C et 110°C, il y a amorçage de réactions chimiques internes exothermiques. Lorsque l'accumulateur n'est plus capable d'évacuer suffisamment de chaleur, la température de la cellule augmente jusqu'à destruction, ce phénomène étant désigné usuellement sous l'appellation d'emballement thermique (en anglais «*Thermal Runaway*»).

Autrement dit, un emballement thermique se produit dans une cellule (accumulateur), lorsque l'énergie dégagée par les réactions exothermiques qui surviennent à l'intérieur de celle-ci, excède la capacité à la dissiper à l'extérieur. Cet emballement peut être suivi d'une génération de gaz et d'explosion et/ou feu. Pour ce phénomène d'emballement thermique, on se reportera à la publication [1] et au protocole décrit dans cette publication. Les températures dites « d'auto-échauffement » et « d'emballement thermique » sont respectivement notées T1 et T2 dans cette publication.

La température T1, typiquement 70°C, dans la figure 2 de la publication, est la température à partir de laquelle l'accumulateur s'échauffe sans source externe à une vitesse typique de 0,02 °C/min en conditions adiabatiques.

La température T2, typiquement 150°C, dans la figure 2 de la publication, est la température à partir de laquelle l'accumulateur atteint une vitesse d'échauffement typique de 10°C/min en conditions adiabatiques, ce qui conduit à la fusion du séparateur dans le faisceau électrochimique de l'accumulateur, à un court-circuit et donc à l'effondrement de la tension.

Par « emballement thermique », on peut ainsi comprendre ici et dans le cadre de l'invention, un rapport entre la valeur de la dérivée de la température d'échauffement et celle du temps au moins égal à 0,02°C par min.

Également, le maintien d'une température inférieure à 70°C permet d'augmenter la durée de vie d'un accumulateur, car plus la température de fonctionnement d'un accumulateur est élevée, plus sa durée de vie sera diminuée.

En outre, certaines chimies d'accumulateurs requièrent une température de fonctionnement bien au-delà de la température ambiante et par conséquent, il s'avère nécessaire de réguler leur niveau de température par un préchauffage initial des accumulateurs, voire par un maintien en température permanent des accumulateurs.

Au niveau d'une cellule (accumulateur), les différents dispositifs internes de protection connus sont:
- un dispositif à coefficient de température positif (PTC acronyme anglo-saxon pour «*Polymeric positive Temperature Coefficient*») : actuellement, un grand nombre d'accumulateurs cylindriques déjà commercialisés en sont munis. Un tel dispositif se présente sous la forme d'un anneau en polymère isolant électriquement chargé de particules conductrices. En cas de surcharge, ce polymère chauffe, change de phase, s'expanse, écarte les particules conductrices, devient plus résistif et limite ainsi le passage du courant ;
- un dispositif d'interruption du courant (CID pour « current interruption device »): il interrompt le courant si la pression du gaz dans la cellule dépasse les limites spécifiées;
- un dispositif coupe circuit (en anglais « shutdown ») qui empêche la génération de courants élevés par fusion de l'un des polymères d'un séparateur multicouche qui bouche les porosités du séparateur ;
- un évent constitué d'une soupape ou d'un disque de rupture, qui s'ouvre lorsque la pression interne augmente brutalement, et dépasse une pression critique déterminée, afin d'éviter l'explosion de la cellule ;
- un fusible thermique, actuellement mis en œuvre dans les accumulateurs de grande capacité, qui coupe le courant dès lors que la température dans l'accumulateur est trop élevée.

Ces dispositifs de protection désignés aussi par organes de sécurité des cellules (accumulateurs) jouent un rôle primordial dans la mitigation des effets lies à leur emballement thermique.

Par ailleurs, les fabricants de batterie ont pour objectif d'augmenter constamment l'énergie de leurs batteries afin d'en améliorer les performances. Ainsi, l'utilisation de matériaux à haute capacité énergétique mais avec un comportement fortement exothermique en cas d'emballement thermique d'un accumulateur est de plus en plus courante : [2].

Au niveau des modules ou pack-batterie, le BMS (acronyme anglo-saxon pour « Battery Management System ») intègre une fonction de protection/sécurité. Des fusibles peuvent également mis en œuvre.

Ces protections/sécurités mentionnées sont efficaces par rapport aux défauts pour lesquels elles sont conçues, mais ne peuvent protéger les accumulateurs lorsque le défaut électrique, par exemple un court-circuit dû à un double défaut d'isolement), apparaît en amont de celles-ci ou qu'elles sont défaillantes.

C'est pourquoi, dans le but de protéger les accumulateurs de systèmes peu puissants, pouvant délivrer typiquement quelques ampères, et de basse tension, typiquement de quelques volts à quelques dizaines de volts), les fabricants d'accumulateur, intègrent au sein même de l'accumulateur, les organes de protection/sécurité actifs ou passifs, mentionnés ci-dessus, qui ont pour fonction générale de déconnecter le cœur électrochimique de l'accumulateur de ses bornes de sortie, et donc, de l'isoler électriquement d'un module ou pack-batterie. Ces organes de protection peuvent protéger les accumulateurs lors de défaillances à l'échelle d'un groupe d'accumulateurs, par exemple, la surcharge d'un, ou de plusieurs accumulateurs ou lors d'un court-circuit d'un ou de plusieurs accumulateurs.

Parmi ces organes de sécurité, un dispositif CID est intégré à la majorité des accumulateurs Li-ion existants de format cylindrique de petite taille, soit communément, 18 mm de diamètre et 65 mm de longueur ou 21 mm de diamètre et 70 mm de longueur. Un tel dispositif, par exemple décrit dans le brevet US10770711B1, est constitué de deux disques de métal électriquement conducteur, soudés par point entre eux en leur centre de manière à assurer la conduction électrique. Le disque inférieur est percé à plusieurs endroits afin de laisser passer les gaz, le disque supérieur est à l'interface entre l'intérieur du boitier d'accumulateur et l'environnement extérieur. Lorsque des gaz sont générés à l'intérieur de l'accumulateur, par exemple suite à des dégradations, et que la pression atteint environ 10 bar à l'intérieur de la cellule Li-ion du boitier d'accumulateur, le disque supérieur se déforme, arrachant la soudure avec le disque inférieur qui reste fixe, interrompant par la même occasion le courant.

Dans le cas d'un unique accumulateur alimentant un circuit électrique, un dispositif CID est un composant déclenché par la pression interne qui interrompt le courant sous la tension de l'accumulateur protégé, soit 4,2 V maximum pour les accumulateurs à cathode NMC et anode graphite.

Cependant, lors d'assemblage en module ou pack-batterie, de plus haute tension, par exemple 400 V ou 800 V pour les applications automobiles, avec un nombre important d'accumulateurs mis en série, plusieurs dizaines par exemple, le dispositif CID doit interrompre un courant pouvant atteindre plusieurs milliers d'ampère sous la tension de la branche, qui peut être de plusieurs centaines de volts. Or, les fabricants de CID ne spécifient pas le pouvoir de coupure des CID, c'est-à-dire le courant maximum qu'ils peuvent interrompre sous la tension imposée par le circuit. Classiquement, un pouvoir de coupure est défini pour plusieurs niveaux de tensions d'utilisation dans la plage autorisée d'utilisation du dispositif. Si celui-ci est dépassé, un arc électrique peut se créer, se maintenir et mener l'accumulateur à l'emballement thermique : [3].

Classiquement, les CID tels que celui décrit assure aussi la fonction évent. Si la pression continue à croître, le disque supérieur se rompt localement ou totalement et les gaz sous pression sont libérés pour éviter l'explosion de l'accumulateur.

En résumé, les dispositifs CID existants ainsi que les autres organes de sécurité intégrés aux accumulateurs de petite taille, notamment de format cylindrique, sont pour l'instant incapables d'interrompant des courants et des tensions supérieures de plusieurs ordres de grandeur au courant de défaut et au niveau de tension d'un accumulateur unitaire. En effet, leur pouvoir de coupure est trop faible, en plus de n'être pas spécifiés par les fabricants d'accumulateurs.

Dans un autre domaine technique que celui des accumulateurs électrochimiques, des dispositifs de coupure de courant électrique à fort pouvoir de coupure ont été développés.

Pour un relais, le pouvoir de coupure est notamment fonction de la distance d'ouverture des contacts électriques : plus l'ouverture mécanique est grande, plus le relais possède un pouvoir de coupure important. Cependant, le pouvoir de coupure dans l'air à pression atmosphérique de contacts électriques de relais est relativement faible. A titre d'exemple, le relais V23076A1001C133 1393277-4 du fabricant TE Connectivity nécessite 0,5 mm d'ouverture pour être spécifié à 12V et 30A de pouvoir de coupure répétitif. C'est surtout le cas en courant continu car il n'y a pas de passages par zéro du courant comme en alternatif. Ce passage par zéro du courant provoque l'extinction totale ou partielle de l'arc deux fois par période du courant alternatif. Dans les fusibles, c'est une matière conductrice électriquement qui fond et un arc apparait de part et d'autre de la zone où la matière conductrice a disparu par fusion.

Afin d'améliorer le pouvoir de coupure la solution classique est de placer les contacts des relais ou la matière fusible des fusibles dans un environnement défavorable pour le maintien d'un arc électrique. Par exemple, dans le cas des fusibles à haut pouvoir de coupure, l'élément fusible est placé dans un sable de silice pure. La silice est une solution classique pour l'amélioration du pouvoir de coupure dans le domaine des fusibles car elle est d'une part isolante électrique et d'autre part sa fusion lors du contact avec l'arc est endothermique ce qui a pour effet de refroidir l'arc et donc de l'interrompre. Finalement, lorsque la silice en fusion suite au contact avec l'arc se refroidit elle se transforme en fulgurite (silice amorphe), qui est un isolant électrique et qui empêche le réamorçage d'un arc électrique. Aucune de ces solutions n'a à ce jour été intégrée dans un accumulateur de type métal-ion.

Dans ce contexte, il existe un besoin pour améliorer encore les pouvoirs de coupure des solutions de sécurité d'accumulateurs électrochimiques, notamment d'accumulateurs métal-ion.

Le but de l'invention est de répondre au moins en partie à ce besoin.

### Exposé de l'invention

Pour ce faire, l'invention concerne, sous l'un de ses aspects, un accumulateur électrochimique (A) métal-ion comprenant :
- au moins une cellule électrochimique constituée d'une cathode, d'une anode et d'un séparateur imprégné d'un électrolyte agencé entre la cathode et l'anode, la(les) cellule(s) définissant un faisceau électrochimique ;
- un boîtier agencé pour contenir de manière étanche le faisceau électrochimique ;
- deux bornes de sortie de courant dont une dite première borne traverse une paroi du boîtier ou ferme celui-ci tout en étant isolée électriquement de celui-ci ;
- un dispositif d'interruption du courant comprenant :
   - une première pièce électriquement conductrice reliée à l'une ou l'autre de l'(des) anode(s) et de la (des) cathode(s), montée fixe par rapport au boitier et isolé électriquement par rapport aux bornes de sortie de courant, configurée pour laisser passer les gaz générés depuis le faisceau électrochimique,
   - une deuxième pièce électriquement conductrice, pleine et montée de manière étanche dans le boitier, et comprenant une première portion d'extrémité reliée à une des bornes de sortie et une deuxième portion d'extrémité dans le prolongement de la première portion, et configurée pour occuper deux positions possibles, une première position initiale dans laquelle elle est reliée électriquement à la première pièce électriquement conductrice, et une deuxième position dite déformée dans laquelle elle est éloignée de la première pièce électriquement conductrice et sans y être reliée électriquement, le passage entre la première position et la deuxième position s'effectuant sous la pression de gaz générés depuis le faisceau électrochimique, la deuxième portion d'extrémité étant soudée directement ou par l'intermédiaire d'un élément électriquement conducteur en un ou plusieurs points de contact à la première pièce électriquement conductrice, de sorte à former un coupe-circuit lors du passage entre la première position initiale et la position déformée,
   - une paroi longitudinale fermée sur elle-même définissant intérieurement un volume, , l'agencement relatif entre la paroi longitudinale la deuxième portion d'extrémité de la deuxième pièce électriquement conductrice et la première pièce électriquement conductrice étant tel que le volume est fermé et définit un réservoir rempli d'au moins un matériau endothermique et isolant électrique.

Avantageusement, le passage de la première position initiale à la position déformée de la deuxième pièce électriquement conductrice ouvre le réservoir de matériau endothermique et isolant électrique en permettant la dispersion dudit matériau.

Selon une variante de réalisation, le faisceau électrochimique est de forme allongée selon un axe longitudinal (X); la première borne comprenant de préférence au moins un trou débouchant pour laisser passer les gaz.

Selon une autre variante de réalisation, la première pièce électriquement conductrice du dispositif d'interruption du courant est reliée à l'une ou l'autre de l'(des) anode(s) et de la (des) cathode(s) à une extrémité longitudinale du faisceau électrochimique, de préférence de forme plane et comprenant de préférence au moins un trou débouchant pour laisser passer les gaz générés depuis le faisceau électrochimique.

De préférence, le coupe-circuit est à fusible.

Selon un premier mode de réalisation, la deuxième portion d'extrémité est la paroi longitudinale soudée directement en un ou plusieurs points de contact à la première pièce électriquement conductrice.

Selon un deuxième mode de réalisation, la paroi longitudinale est en matériau(x) électriquement isolant(s), la deuxième portion d'extrémité comprenant au moins une protubérance soudée directement en un ou plusieurs points de contact à la première pièce électriquement conductrice.

Selon un troisième mode de réalisation, la paroi longitudinale est en matériau(x) électriquement isolant(s), la deuxième portion d'extrémité comprenant au moins une protubérance soudée directement en un ou plusieurs points de contact à la première pièce électriquement conductrice.

Selon un quatrième mode de réalisation, l'accumulateur électrochimique métal-ion comprend un élément électriquement conducteur assurant le contact électrique entre la première pièce électriquement conductrice et la deuxième portion d'extrémité de la deuxième pièce électriquement conductrice, la paroi longitudinale étant en matériau(x) électriquement isolant(s), l'élément électriquement conducteur ayant une fonction de fusible électrique, configuré adapté pour fondre et rompre le contact en cas de surintensité électrique.

Avantageusement, l'élément électriquement conducteur comprend au moins une languette électriquement conductrice soudée directement en un ou plusieurs points de contact à la première pièce électriquement conductrice et à la deuxième portion d'extrémité, de préférence plane.

La languette électriquement conductrice peut être avantageusement perforée d'un ou plusieurs trous débouchants.

Selon une variante de réalisation avantageuse, la première partie d'extrémité de la deuxième pièce électriquement conductrice comprend une portion annulaire plane en appui plan et soudée à la première borne de sortie.

Avantageusement, le matériau endothermique et isolant électrique est sous forme granulaire.

De préférence le matériau endothermique et isolant électrique étant choisi parmi la silice, KBF₄, KMgCl₃, NaKMgCl, KMgZnCl ou un mélange de ceux-ci.

L'accumulateur peut être de forme générale cylindrique ou prismatique. Il peut s'agir de d'un accumulateur Li-ion de format standard 18650, et de manière générale de n'importe quel des formats standards suivants : 10440 / 14500 / 14650 / 16340 / 17335 / 17500 / 17670 / 18350 / 18490 / 18500 / 18650 / 18700 / 22650 / 25500 / 26650 / 32650.

Selon une variante de réalisation avantageuse, dans un accumulateur de forme cylindrique, la première pièce électriquement conductrice est un disque, la première portion d'extrémité de la deuxième pièce électriquement conductrice est un anneau, la paroi longitudinale est un cylindre creux ; les axes centraux du disque, de l'anneau et du cylindre creux étant confondus avec l'axe central (X).

Le faisceau électrochimique peut être constitué d'une seule cellule électrochimique, obtenu par enroulement ou comprendre un empilement de cellules électrochimiques élémentaires comprenant chacune une cathode, une anode, et un séparateur imprégné d'électrolyte intercalé entre l'anode et la cathode.

Le faisceau électrochimique selon l'invention peut être réalisé selon une technique de pliage dite en Z (« Z-fold »). Dans un tel process, l'ajout de la zone de séparateur à température de fusion moindre nécessite de stopper le pliage en lui-même avant la dernière couche d'électrode afin d'ajouter ladite zone fusible à moindre température aux extrémités latérales de l'empilement de cellules électrochimiques.

Selon une caractéristique supplémentaire avantageuse, la deuxième pièce électriquement conductrice comprend au moins une zone amincie de rupture destinée à constituer un évent des gaz générés en surpression dans l'accumulateur.

Chaque accumulateur peut être un accumulateur Li-ion dans lequel :
- le matériau d'électrode(s) négative(s) est choisi dans le groupe comportant le graphite, le lithium, l'oxyde de titanate Li₄TiO₅O₁₂ ;
- le matériau d'électrode(s) positive(s) est choisi dans le groupe des composés d'intercalation/insertion de type LiMO₂ avec M représentant Co, Ni ou Mn ; LiM'₂O₄ avec M' représentant Ni ou Mn ; LiM"PO₄ avec M" représentant Fe, Co, Mn ou Ni.

Ainsi, l'invention consiste essentiellement à réaliser un dispositif d'interruption de courant, pour qu'il soit intégré dans l'accumulateur, commandé en pression, et possède un haut pouvoir de coupure.

En effet, lors de l'utilisation d'accumulateurs métal-ion en dehors de leur zone de sécurité (thermique, électrique ou mécanique) un indicateur du début de dégradation des matériaux électrochimiques est la génération de gaz. Ces gaz générés et contenus à l'intérieur de l'accumulateur font augmenter la pression interne de celui-ci. Cette pression est utilisée afin de séparer, l'une de l'autre, deux pièces électriquement conductrices de contact électrique, typiquement des pièces métalliques, au niveau d'une des bornes de sortie de l'accumulateur, afin d'interrompre le circuit électrique de l'accumulateur.

En fonctionnement normal de l'accumulateur, lors de l'utilisation nominale de ces pièces de contact, celles-ci sont reliées électriquement, c'est-à-dire que leur contact électrique est effectif et laisse passer le courant. La liaison électrique entre ces pièces de contact peut être réalisée par la soudure, par exemple soudure par point ou soudure laser. La réalisation de cette liaison électrique par soudure permet de minimiser la résistance de contact et donc les pertes, lors du fonctionnement nominal de l'accumulateur et également d'être ouvert par arrachement de cette soudure, lors d'une surpression interne à l'accumulateur.

Une fois le contact ouvert entre ces deux pièces, il n'est pas nécessaire et il faut même éviter que celui revienne à son état initial, puisque l'accumulateur est à présent dégradé et instable.

La mise en œuvre de ces deux pièces de contact électrique peut être réalisée, par exemple, par deux pièces métalliques agencées à l'une des extrémités longitudinales de l'accumulateur. Lorsque l'accumulateur est de format cylindrique, ces deux pièces peuvent être sous une forme générale de disques.

Une des deux pièces de contact est perforée de sorte à permettre le passage des gaz générés par l'accumulateur. Cette pièce de contact perforée est reliée par un ou plusieurs points de contact à un deuxième disque concentrique.

Cette deuxième pièce de contact a sa face interne soumise à la pression interne de l'accumulateur et sa face externe au contact et à la pression de l'air ambiant. Lorsque la différence de pression entre l'intérieur de l'accumulateur et la pression atmosphérique atteint un seuil défini, cette deuxième pièce de contact se déforme, grâce à la plasticité, arrachant par la même occasion le ou les points de contact entre les deux pièces de contact. Cette action entraîne l'interruption du courant entre l'électrode à laquelle est reliée la pièce de contact perforée et la borne de l'accumulateur associée.

C'est à l'endroit de l'arrachement du contact électrique qu'un arc électrique peut se former. Afin d'être en mesure d'interrompre cet arc, l'invention prévoit que la zone de contact électrique s'ouvrant lors de l'arrachement soit au contact d'un matériau endothermique isolante électrique, stockée préalablement dans un réservoir délimité entre les deux pièces de contact, qui absorbe l'énergie de l'arc électrique.

Ce matériau fusible est libérée sur la totalité de la zone d'arrachement, absorbant alors l'énergie de l'arc électrique. Avantageusement, lorsque l'accumulateur est dans une position favorisant l'action de la gravité, plus particulièrement à la verticale, la libération du matériau fusible, notamment lorsqu'il est sous forme granulaire, est facilitée.

La quantité nécessaire de matériau fusible dépend de sa nature physico-chimique et des performances désirées, mais pour des formats d'accumulateur existants, l'ordre de grandeur envisagé par les inventeurs est de quelques grammes.

Si la libération de matière par la gravité n'est pas possible, par exemple si l'accumulateur est dans une position où la pièce de contact qui se déforme est en dessous du réservoir, l'extinction de l'arc n'est pas aussi rapide, mais encore possible, car l'arc électrique va consommer la matière de la paroi du réservoir jusqu'à entrer en contact avec le matériau fusible d'extinction de l'arc électrique.

Un exemple avantageux de matériau granulaire utilisable est le sable de silice. D'autres matériaux endothermiques lors d'un changement d'état et isolant électriques peuvent également être utilisés.

Ainsi, grâce à l'invention, le cœur du faisceau électrochimique d'un accumulateur est préservé et on évite un emballement thermique.

Les inventeurs ont été à l'encontre des solutions existantes de conception des accumulateurs métal-ion et des organes de sécurité prévus.

En effet, les dispositifs d'interruption du courant électrique (CID) tels qu'intégrés au sein d'un accumulateur Li-ion avec pour objectif initial de protéger un unique accumulateur, ou un assemblage de faible tension de quelques accumulateurs en série, par exemple trois pour les ordinateurs portables, et ce afin de protéger contre les défauts électriques, tels qu'une surcharge électrique ou un court-circuit.

Cependant, l'homme de l'art des accumulateurs Li-ion ne semble pas avoir pris connaissance, et n'a pas traité, les problèmes liés au pouvoir de coupure de ces dispositifs de protection intégrés dans les accumulateurs.

Une des raisons à cela est la très rapide expansion des technologies Li-ion conçues initialement pour les applications nomades, typiquement le camescope en 1990, puis les ordinateurs portables, vers des systèmes nécessitant des accumulateurs de plus en plus forte puissance, tels que les véhicules électriques. Sans avoir pris connaissance de la problématique, l'homme de l'art n'a donc pas proposé de solutions appropriées, i.e. permettant d'avoir un pouvoir de coupure élevé.

Au final, l'invention permet d'avoir un accumulateur qui intègre en son sein un dispositif d'interruption de courant à pouvoir de coupure amélioré par rapport à ceux de l'état de l'art. Ce dispositif intégré peut interrompre des courant et des tensions supérieurs de plusieurs ordres de grandeur au courant de défaut et au niveau de tension d'un accumulateur unitaire.

Cela peut augmenter considérablement la sécurité d'un module ou d'un pack-batterie, comprenant plusieurs accumulateurs, notamment en série électrique.

Les secteurs industriels où l'invention peut avoir un intérêt particulier sont ceux où les modules ou pack-batteries nécessitent la mise en série d'une pluralité d'accumulateurs, typiquement d'une vingtaine et au-delà. On peut citer ici le domaine du stockage d'énergie stationnaire, le secteur aéronautique, les véhicules automobiles électriques.

D'autres avantages et caractéristiques de l'invention ressortiront mieux à la lecture de la description détaillée d'exemples de mise en œuvre de l'invention faite à titre illustratif et non limitatif en référence aux figures suivantes.

### Brève description des dessins

[Fig 1] la figure 1 est une vue schématique en perspective éclatée montrant les différents éléments d'un accumulateur lithium-ion.
[Fig 2] la figure 2 est une vue de face montrant un accumulateur lithium-ion avec son emballage souple selon l'état de l'art.
[Fig 3] la figure 3 est une vue en perspective d'un accumulateur lithium-ion selon l'état de l'art avec son emballage rigide constitué d'un boitier de forme cylindrique.
[Fig 4] la figure 4 est une vue en coupe longitudinale et déroulée partielle d'un accumulateur lithium-ion selon l'état de l'art, montrant le faisceau électrochimique constitué d'une seule cellule électrochimique enroulée sur elle-même par bobinage selon une géométrie cylindrique à l'intérieur du boitier.
[Fig 5] la figure 5 est une vue en perspective d'un accumulateur lithium-ion selon l'état de l'art avec son emballage rigide constitué d'un boitier de forme prismatique.
[Fig 6] la figure 6 est une vue isométrique d'un premier mode de réalisation de dispositif d'interruption de courant selon l'invention, destiné à être intégré dans un accumulateur métal-ion de format cylindrique.
[Fig 7] la figure 7 est une vue en perspective et en coupe longitudinale du dispositif selon la figure 6.
[Fig 8] la figure 8 est une vue isométrique d'une des pièces de contact électrique, sous la forme d'un disque perforé du dispositif selon les figures 6 et 7.
[Fig 9] la figure 9 est une vue de côté de l'autre des pièces de contact électrique du dispositif selon les figures 6 et 7.
[Fig 10] la figure 10 est une vue en coupe longitudinale d'un dispositif d'interruption de courant pour un accumulateur métal-ion de format cylindrique selon un deuxième mode de l'invention.
[Fig 11] la figure 11 est une vue isométrique du dispositif selon la figure 10.
[Fig 12] la figure 12 est une vue schématique en coupe longitudinale partielle d'un accumulateur lithium-ion intégrant un dispositif d'interruption de courant selon le deuxième mode de l'invention.
[Fig 13] la figure 13 est une vue isométrique et en coupe longitudinale d'un dispositif d'interruption de courant pour un accumulateur métal-ion de format cylindrique selon un troisième mode de l'invention.
[Fig 14] la figure 14 est une vue en coupe longitudinale d'un dispositif d'interruption de courant pour un accumulateur métal-ion de format cylindrique selon une variante du troisième mode de l'invention.
[Fig 15] la figure 15 est une vue schématique en coupe longitudinale partielle d'un accumulateur lithium-ion intégrant un dispositif d'interruption de courant selon le troisième mode de l'invention.

### Description détaillée

Les figures 1 à 5 sont relatives à des exemples différents d'accumulateur Li-ion, d'emballage souple et boitier d'accumulateurs ainsi qu'un pack-batterie selon l'état de l'art. Ces figures 1 à 5 ont déjà été commentées en préambule et ne le sont donc pas plus ci-après.

Par souci de clarté, les mêmes références désignant les mêmes éléments selon l'état de l'art et selon l'invention sont utilisées pour toutes les figures 1 à 14.

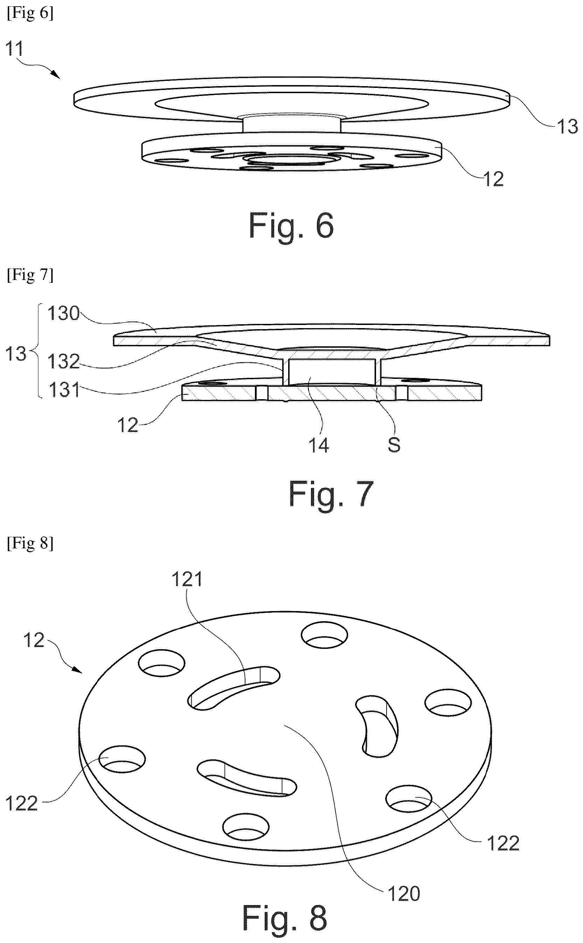

Les figures 6 à 8 illustrent un dispositif d'interruption de courant 11 selon l'invention, destiné à être intégré au sein d'un accumulateur Li-ion de format cylindrique. Les pièces électriquement conductrices 12, 13 du dispositif 11 peut être réalisé avec le même outil industriel que celui mis en œuvre pour réaliser les dispositif d'interruption de courant CID actuellement existant.

La première pièce métallique 12, électriquement conductrice, est destinée à être reliée à l'une ou l'autre de l'(des) anode(s) et de la (des) cathode(s) à une extrémité longitudinale du faisceau électrochimique d'un accumulateur de forme plane.

Comme montré à la figure 8, cette pièce métallique 12 est un disque métallique, électriquement conducteur, d'un diamètre inférieur à celui de l'accumulateur et d'une épaisseur variable en fonction de la conception et de la taille de l'accumulateur. A titre d'exemple, le disque métallique est en une nuance d'aluminium, son diamètre peut être égal à 12 mm de diamètre pour un accumulateur de 18mm de diamètre, son épaisseur peut être égal à 0,5 mm

Ce disque métallique 12 comprend une portion centrale 120 qui est pleine et il est perforé, à la périphérie de sa portion centrale 120, d'au moins un trou débouchant 121, 122 pour laisser passer les gaz générés depuis le faisceau électrochimique, autrement dit permettant aux faces principales du disque d'être en iso pression, plus particulièrement une fois le dispositif intégré au sein d'un accumulateur.

La forme et le nombre de perforations (trous débouchants), 121, 122 dépend en partie de la surface nécessaire à l'assemblage avec les autres pièces du dispositif 11, du volume de gaz passant désiré et de sa répartition pour l'appui sur la deuxième pièce électriquement conductrice ou encore de la résistance mécanique du disque souhaitée. La perforation de ces ouvertures dans le disque est réalisable selon divers procédés usuels d'usinage, par exemple une découpe laser. Dans l'exemple illustré, des trous débouchants 121 de section en arc de cercle sont répartis angulairement de manière régulière selon une première couronne autour de la portion centrale, et des trous 122 de section circulaire sont répartis également angulairement de manière régulière selon une deuxième couronne autour de la première couronne.

Le dispositif 11 comprend une deuxième pièce électriquement conductrice 13 pleine, qui est destinée à être montée de manière étanche dans un boitier 6 d'accumulateur en étant isolée électriquement de celui-ci.

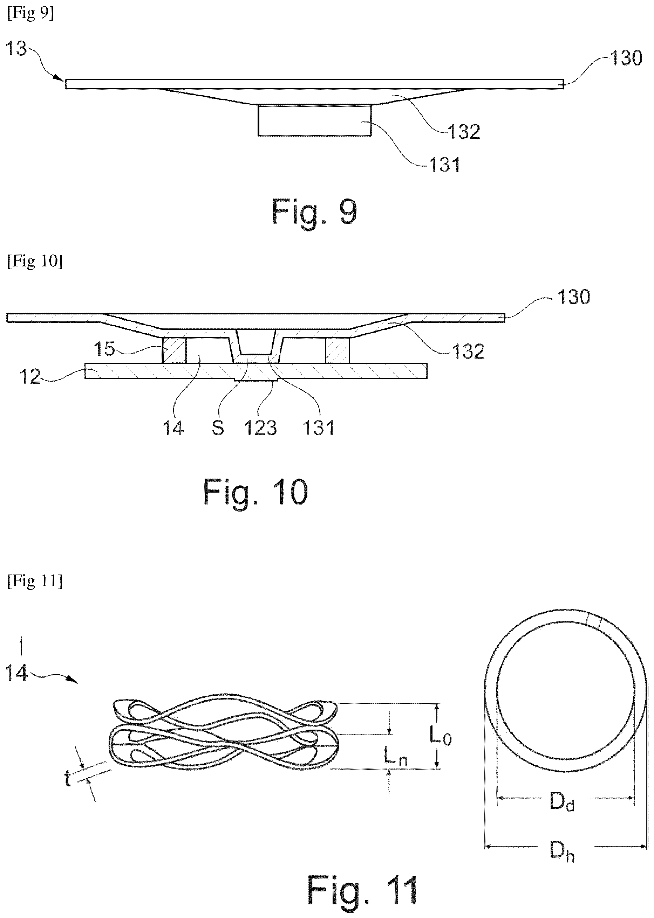

Tel qu'illustré à la figure 9, cette deuxième pièce 13 comprend une première portion d'extrémité 130, sous la forme d'un anneau, destinée à être reliée à une borne de sortie d'un accumulateur et une deuxième portion d'extrémité 131, sous la forme d'un cylindre creux, dans le prolongement de la première portion 130 en étant reliée par une portion intermédiaire 132, de forme tronconique.

Ce cylindre creux 131, constitue avec la portion pleine 120 du disque 12, un réservoir de matériau 14. Ce réservoir de matériau est par exemple réalisable par l'emboutissage d'un disque de métal conducteur.

La portion en anneau 130 de deuxième pièce 13 a un diamètre extérieur légèrement inférieur à celui du boitier 6 de l'accumulateur et une épaisseur variable en fonction de résistance mécanique souhaitée. A titre d'exemple, cette pièce 13 est en une nuance d'aluminium, son diamètre peut être égal à 16 mm de diamètre pour un accumulateur de 18mm de diamètre, son épaisseur peut être égal à 0,5 mm.

Le fond de la portion cylindrique 131, délimitant le volume du réservoir de matériau 14, peut avantageusement être une zone amincie, de faiblesse mécanique de sorte à constituer un évent des gaz de l'accumulateur. Cette zone de faiblesse mécanique est dimensionnée et répartie en fonction de la direction et du débit souhaité lors de la libération du volume sous pression, par exemple lorsque la pression interne à l'accumulateur peut atteindre 20 bars.

Cette portion cylindrique 131 de la deuxième pièce 13 est directement soudée à la première pièce électriquement conductrice 12, de sorte à former un coupe-circuit. Pour cet assemblage entre le cylindre 131 et la portion pleine 120 du disque 12, on peut les positionner de manière concentrique, puis les plaquer l'un contre l'autre. Au final, la tenue mécanique et la stabilité du contact électrique peut être faite par soudure, par exemple en transparence du réservoir avec le disque 12. Cette soudure S peut être réalisée en un ou plusieurs points, voire selon une ligne continue et ce de diverses façons, par exemple par soudure par points, soudure laser ou soudure à ultrasons.

Avant l'assemblage entre les deux pièces 12, 13, le réservoir 14 est rempli d'au moins un matériau endothermique et isolant électrique. Ce matériau endothermique améliore le pouvoir de coupure lors de l'interruption du courant par le dispositif 11. Par exemple, le matériau peut être du sable de silice.

Le fonctionnement du dispositif selon l'invention 11 est le suivant.

Lorsque la pression à l'intérieur de l'accumulateur atteint une pression fixée, par exemple 10 bars, la pièce 13 se déforme vers l'extérieur de l'accumulateur. La soudure entre le réservoir de matière 14 et le disque 12 se rompt/s'arrache, interrompant alors le contact électrique entre les deux pièces 12 et 13, ce qui génère un arc électrique dans cette zone de rupture/d'arrachement.

Le matériau endothermique fusible est alors libéré sur la totalité de la zone d'arrachement, absorbant alors l'énergie de l'arc. La quantité du matériau fusible dépend du matériau utilisé et des performances désirées, mais l'ordre de grandeur est quelques grammes. Si l'accumulateur est positionné notamment à la verticale avec le réservoir orienté vers la bas, alors l'action de la gravité va accélérer la libération de la matière. Si la gravité ne peut pas agir, alors l'extinction de l'arc n'est pas aussi rapide, mais encore possible, car l'arc électrique va consommer la matière de la paroi du réservoir 14 jusqu'à entrer en contact avec la matériau endothermique prévu pour d'extinction de l'arc.

Une option possible que l'on peut conférer au dispositif 11 selon l'invention déclenché par la pression interne de l'accumulateur est de rajouter une fonction fusible physique pour assurer une protection contre les sur-courant ou courant de court-circuit.

Cet élément physique fusible joue un rôle en synergie avec l'action du matériau endothermique pour encore faciliter l'extinction d'un arc électrique au sein d'un accumulateur.

Ainsi, ces deux éléments confèrent une protection électrique à l'accumulateur soit dans une situation de surcharge et/ou surchauffe de ce dernier, où la dynamique permet la génération de gaz puis l'ouverture du contact lié à la surpression, soit dans une situation de court-circuit ou de surintensité où le phénomène physique et la dynamique ne permettent pas de générer des gaz afin de déformer la deuxième pièce.

Dans cette dernière situation, un élément fusible peut être dimensionné de façon à entrer en fusion lorsque le courant dans l'accumulateur est supérieur au courant maximal qu'il peut admettre.

Cet ajout de fonctionnalité nécessite que la paroi longitudinale qui délimite le réservoir de matériau endothermique fusible 14 ne soit pas électriquement conducteur car l'élément fusible constitue également la zone d'arrachement en surpression. Et donc, le déclenchement d'une seule des deux fonctions doit interrompre totalement le courant dans l'accumulateur. Pour cela, le réservoir fusible peut être constitué en au moins un matériau électriquement, isolant électrique et de préférence résistant aux températures élevées. Il peut s'agir d'un polymère électriquement isolant.

Deux modes de réalisation de cette option sont possibles.

L'un de ces deux modes est illustré aux figures 10 et 11, la pièce 13 comprend, en tant que deuxième portion d'extrémité 131, une protubérance, qui peut être réalisée par emboutissage. Cette protubérance 131 soudée au disque 12 est amincie pour créer une zone de rupture correspondant à la zone de contact électrique avec le disque 12. La fonction fusible est donc assurée par la structure même de la pièce 12, par sa protubérance amincie. De cette manière, la largeur de la zone de contact permet de sélectionner le calibre en courant de la fonction fusible. Comme illustré la zone de contact électrique peut être centré en regard d'un plot de connexion 123 réalisé sur l'autre face du disque 12 pour la liaison électrique avec une électrode du faisceau électrochimique d'un accumulateur.

Un cylindre creux 15, électriquement isolant est agencé autour de la protubérance 131 et délimite ainsi avec les deux pièces 12, 13 le réservoir 14 rempli de matériau endothermique.

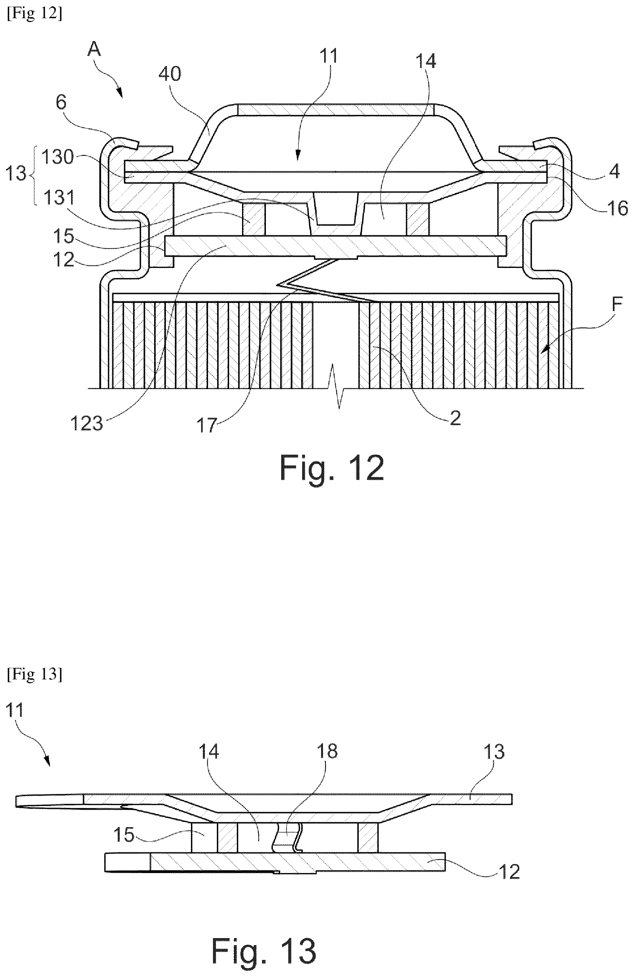

Un exemple d'intégration du dispositif d'interruption de courant 11, plus précisément selon le mode des figures 10, 11, au sein d'un accumulateur cylindrique A, de type Li-ion, est illustré à la figure 12. Dans cet exemple, la borne de sortie positive 4 forme le couvercle du boitier 6 d'accumulateur A et elle comprend un trou débouchant 40 pour le passage de l'air ambiant.

L'anneau 130 est en appui plan et soudé à la borne de sortie 4 et ces deux composants sont maintenus dans le boitier 6 en étant montés de manière étanche dans un joint annulaire 16, électriquement isolant.

Le disque 12, immobile au sein du boitier 6, est relié électriquement à la cathode 2 du faisceau électrochimique F par un collecteur de courant 17 sous la forme d'une languette métallique repliée sur elle-même en contact, de préférence en étant soudée au plot de connexion 123 du disque 12.

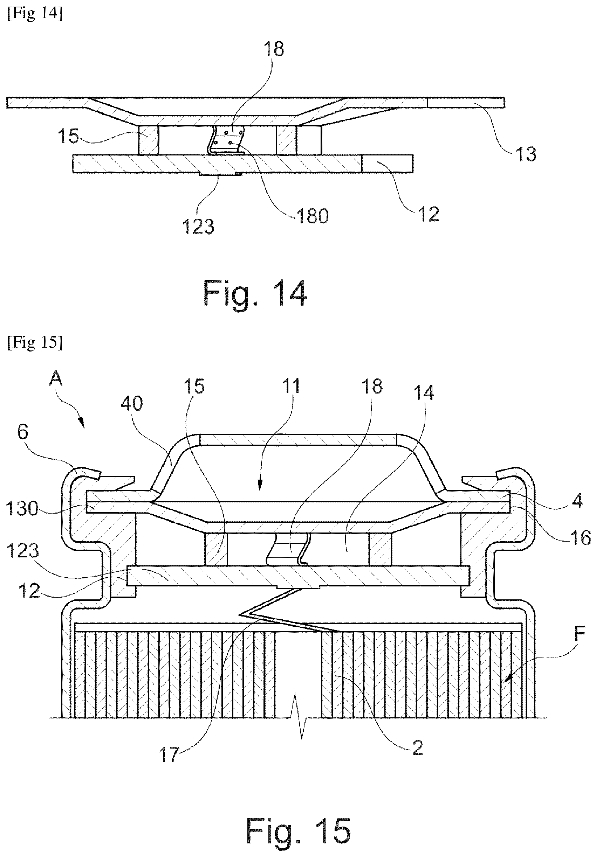

L'autre mode de réalisation de l'option avec une fonction physique fusible est illustré aux figures 13 et 14. Ici, la fonction fusible n'est pas constituée par la structure 131 de la pièce 13, mais par un élément fusible, électriquement conducteur, 18 qui est soudé, à ses deux extrémités longitudinales, à chacune des deux pièces 12, 13. Cet élément distinct 18 qui peut être sous la forme d'une languette repliée sur elle-même est dimensionné d'une part pour s'arracher et interrompre le courant lors d'une surpression de l'accumulateur, et d'autre part pour assurer la fonction fusible en cas de surintensité dans l'accumulateur. Cet élément 18 est agencé dans le réservoir 14 afin d'améliorer le pouvoir de coupure du courant.

Une variante de cet élément fusible 18 est illustrée à la figure 14. L'élément 18 est perforé en un ou plusieurs points 180. Ces perforations 180 permettent à la fois d'abaisser la résistance mécanique et donc la pression d'arrachement de l'élément 18 et d'effectuer une mise en série de fusibles au sein même du seul élément 18. Cela permet d'augmenter le pouvoir de coupure du fusible en mettant des arcs en série. La tension des arcs en série s'additionnant, la décroissance du courant est plus rapide.

Un exemple d'intégration du dispositif d'interruption de courant 18, plus précisément selon le mode des figures 13, 14, au sein d'un accumulateur cylindrique A, de type Li-ion, est illustré à la figure 15.

L'invention n'est pas limitée aux exemples qui viennent d'être décrits ; on peut notamment combiner entre elles des caractéristiques des exemples illustrés au sein de variantes non illustrées.

D'autres variantes et améliorations peuvent être envisagées sans pour autant sortir du cadre de l'invention.

La pièce de contact électrique perforée d'un dispositif d'interruption de courant selon l'invention peut être reliée électriquement tout aussi bien à une électrode positive (cathode), du faisceau électrochimique ou à une électrode négative (anode).

N'importe quelle portion de la deuxième pièce électriquement conductrice du dispositif peut présenter au moins une zone amincie de rupture pour constituer un évent des gaz de l'accumulateur.

Bien que les exemples illustrés se rapportent à des accumulateurs à boitier de format cylindrique, l'invention s'applique à des accumulateurs à boitier de format prismatique.

### Liste des références citées :

[1] : Xuning Feng, et al. « Key Characteristics for Thermal Runaway of Li-ion Batteries » Energy Procedia, 158 (2019) 4684-4689.
[2]: Xuning Feng, et al. « Thermal runaway mechanism of lithium-ion battery for electric vehicles: A review» Energy Storage Materials, Volume 10, January 2018, Pages 246-267.
[3]: J. Chauvin, D. Chatroux, L. Garnier, P. Azais and R. Vincent, "Key Points Regarding Electrical Safety in Small Cylindrical Li-ion Cell Assemblies During Overcharge or Partial Short-Circuit, " PCIM Europe 2023; International Exhibition and Conference for Power Electronics, Intelligent Motion, Renewable Energy and Energy Management, Nuremberg, Germany, 2023, pp. 1-8, doi: 10.30420/566091053.

## Revendications

1. Accumulateur électrochimique (A) métal-ion comprenant :
a. au moins une cellule électrochimique constituée d'une cathode (2), d'une anode (3) et d'un séparateur (1) imprégné d'un électrolyte agencé entre la cathode (2) et l'anode (3), la(les) cellule(s) définissant un faisceau électrochimique ;
b. un boîtier (6) agencé pour contenir de manière étanche le faisceau électrochimique ;
c. deux bornes (4, 5) de sortie de courant dont une dite première borne (4) traverse une paroi du boîtier (6) ou ferme celui-ci tout en étant isolée électriquement de celui-ci ;
d. un dispositif d'interruption du courant (11) comprenant :
une première pièce électriquement conductrice (12) reliée à l'une ou l'autre de l'(des) anode(s) et de la (des) cathode(s), montée fixe par rapport au boitier et isolé électriquement par rapport aux bornes de sortie de courant, configurée pour laisser passer les gaz générés depuis le faisceau électrochimique,
une deuxième pièce électriquement conductrice (13), pleine et montée de manière étanche dans le boitier, et comprenant une première portion d'extrémité reliée à une des bornes de sortie et une deuxième portion d'extrémité dans le prolongement de la première portion, et configurée pour occuper deux positions possibles, une première position initiale dans laquelle elle est reliée électriquement à la première pièce électriquement conductrice (12), et une deuxième position dite déformée dans laquelle elle est éloignée de la première pièce électriquement conductrice (12) et sans y être reliée électriquement, le passage entre la première position et la deuxième position s'effectuant sous la pression de gaz générés depuis le faisceau électrochimique, la deuxième portion d'extrémité étant soudée directement ou par l'intermédiaire d'un élément électriquement conducteur en un ou plusieurs points de contact à la première pièce électriquement conductrice, de sorte à former un coupe-circuit lors du passage entre la première position initiale et la position déformée,
une paroi longitudinale (131, 15) fermée sur elle-même définissant intérieurement un volume, l'agencement relatif entre la paroi longitudinale, la deuxième portion d'extrémité de la deuxième pièce électriquement conductrice et la première pièce électriquement conductrice étant tel que le volume est fermé et définit un réservoir (14) rempli d'au moins un matériau endothermique et isolant électrique.

2. Accumulateur électrochimique (A) métal-ion selon la revendication 1, le passage de la première position initiale à la position déformée de la deuxième pièce électriquement conductrice ouvre le réservoir de matériau endothermique et isolant électrique en permettant la dispersion dudit matériau.

3. Accumulateur électrochimique (A) métal-ion selon la revendication 1 ou 2,
a. le faisceau électrochimique (F) étant de forme allongée selon un axe longitudinal (X) ;
b. la première borne (4) comprenant de préférence au moins un trou débouchant (40) pour laisser passer les gaz.

4. Accumulateur électrochimique (A) métal-ion selon l'une des revendications 1 à 3, la première pièce électriquement conductrice (12) du dispositif d'interruption du courant (11) étant reliée à l'une ou l'autre de l'(des) anode(s) et de la (des) cathode(s) à une extrémité longitudinale du faisceau électrochimique, de préférence de forme plane et comprenant de préférence au moins un trou débouchant (121, 122) pour laisser passer les gaz générés depuis le faisceau électrochimique.

5. Accumulateur électrochimique (A) métal-ion selon l'une des revendications précédentes, la deuxième portion d'extrémité comprenant la paroi longitudinale soudée directement en un ou plusieurs points de contact à la première pièce électriquement conductrice.

6. Accumulateur électrochimique (A) métal-ion selon l'une des revendications 1 à 4, la paroi longitudinale étant en matériau(x) électriquement isolant(s), la deuxième portion d'extrémité comprenant au moins une protubérance soudée directement en un ou plusieurs points de contact à la première pièce électriquement conductrice.

7. Accumulateur électrochimique (A) métal-ion selon l'une des revendications 1 à 4 comprenant un élément électriquement conducteur assurant le contact électrique entre la première pièce électriquement conductrice et la deuxième portion d'extrémité de la deuxième pièce électriquement conductrice, la paroi longitudinale étant en matériau(x) électriquement isolant(s), l'élément électriquement conducteur ayant une fonction de fusible électrique, adapté pour fondre et rompre le contact en cas de surintensité électrique.

8. Accumulateur électrochimique (A) métal-ion selon la revendication 7 l'élément électriquement conducteur comprenant au moins une languette électriquement conductrice soudée directement en un ou plusieurs points de contact à la première pièce électriquement conductrice, et à la deuxième portion d'extrémité, de préférence plane.

9. Accumulateur selon la revendication 8, la languette électriquement conductrice étant perforée d'un ou plusieurs trous débouchants.

10. Accumulateur selon l'une des revendications précédentes, la première partie d'extrémité de la deuxième pièce électriquement conductrice comprenant une portion annulaire plane en appui plan et soudée à la première borne de sortie.

11. Accumulateur selon l'une des revendications précédentes, le matériau endothermique et isolant électrique étant sous forme granulaire.

12. Accumulateur selon l'une des revendications précédentes, le matériau endothermique et isolant électrique étant choisi parmi la silice, KBF4, KMgCl3, NaKMgCl, KMgZnCl ou un mélange de ceux-ci.

13. Accumulateur selon l'une des revendications précédentes, l'accumulateur étant de forme générale cylindrique ou prismatique.

14. Accumulateur selon la revendication 12, l'accumulateur étant de forme cylindrique, la première pièce électriquement conductrice étant un disque, la première portion d'extrémité de la deuxième pièce électriquement conductrice étant un anneau, la paroi longitudinale étant un cylindre creux ; les axes centraux du disque, de l'anneau et du cylindre creux étant confondus avec l'axe central (X).

15. Accumulateur selon l'une des revendications précédentes, la deuxième pièce électriquement conductrice comprenant au moins une zone amincie de rupture destinée à constituer un évent des gaz générés en surpression dans l'accumulateur.

16. Accumulateur selon l'une des revendications précédentes, constituant un accumulateur Li-ion dans lequel :
- le matériau d'anode(s) est choisi dans le groupe comportant le graphite, le lithium, l'oxyde de titanate Li₄TiO₅O₁₂ ;
- le matériau de cathode(s) est choisi dans le groupe des composés d'intercalation/insertion de type LiMO₂ avec M représentant Co, Ni ou Mn ; LiM'₂O₄ avec M' représentant Ni ou Mn ; LiM''PO₄ avec M" représentant Fe, Co, Mn ou Ni.
